# EUROPEAN PATENT SPECIFICATION

(11) **EP 2 167 843 B1**
(45) Date of publication and mention of the grant of the patent: **07.09.2011**
(21) Application number: 08772806.9
(22) Date of filing: 13.06.2008
(51) Int. Cl.: F16H 3/66, F16D 21/08

(54) **DUAL CLUTCH TRANSMISSION WITH PLANETARY GEARSET**
DOPPELKUPPLUNGSGETRIEBE MIT PLANETENGETRIEBESATZ
TRANSMISSION D'EMBRAYAGE DOUBLE ÉQUIPÉE DE TRAIN D'ENGRENAGE PLANÉTAIRE

(30) Priority: 15.06.2007 US 934987 P; 09.08.2007 US 964150 P
(43) Date of publication of application: 31.03.2010
(73) Proprietor: Magna Powertrain Inc., Concord, Ontario L4K 4J5 (CA)
(72) Inventor: LI, Jianwen, Vaughan, Ontario L6A 1H7 (CA); MUIZELAAR, Richard D., Mississauga, Ontario L5L 2M7 (CA)
(74) Representative: Grünecker, Kinkeldey, Stockmair & Schwanhäusser Anwaltssozietät
(86) International application number: PCT/CA2008/001143
(87) International publication number: WO 2008/151443

(56) References cited:
- US-A- 4 200 006
- US-A- 4 513 636
- US-A- 4 537 092
- US-A- 5 342 257
- US-A1- 2005 227 803
- US-B1- 6 752 738

## Description

### BACKGROUND

The present disclosure generally relates to transmissions for automotive vehicles. More particularly, a dual clutch transmission with a planetary gearset is disclosed.

Many dual clutch transmissions (DCTs) include two input shafts. Based on the arrangement of the input shafts, speed gears and various clutch components, the odd numbered speed gears such as first, third, fifth and seventh, are connected to a first input shaft. A second input shaft is connected to the even numbered speed gears such as second, fourth, sixth, eighth and possibly reverse.

At least one known dual clutch transmission includes speed gearsets having two or more meshed gears for each forward drive ratio that is provided. Accordingly, eight speed gearsets are used in combination with a countershaft and at least one reverse gearset to provide eight forward ratios and at least one reverse ratio. The resulting transmission is relatively long and requires many costly speed gears. The weight of this transmission may also be greater than desired.

Another known dual clutch transmission includes two countershafts and at least six speed gearsets to provide eight forward ratios. The length and weight of this transmission may also be greater than desired.
The closest prior art document US 4,200,006 relates to a gear change transmission with differential and a pair of planetary gear sets.

### SUMMARY

According to the present invention, it is suggested to provide a transmission having the features of independent claim 1.

In particular, the transmission includes a first input shaft, a second input shaft and a planetary gearset having an input, a first output and a second output. The first output is in communication with a brake and a first clutch. The second output is in communication with the first clutch, a second clutch and a third clutch. The first clutch selectively drivingly couples the first output and the second output. The brake selectively restricts rotation of the first output. The second clutch selectively drivingly couples the second output and the second input shaft. The third clutch selectively drivingly couples the second output and the first input shaft. A first speed gearset is driven by the first input shaft and a second speed gearset is driven by the second input shaft.

Further areas of applicability will become apparent from the description provided herein. It should be understood that the description and specific examples are intended for purposes of illustration only and are not intended to limit the scope of the present disclosure.

### DRAWINGS

The drawings described herein are for illustration purposes only and are not intended to limit the scope of the present disclosure in any way.

Figure 1 is a schematic representing an eight speed dual clutch transmission according to the teachings of the present disclosure;

Figure 2 is a gear ratio, ratio step and shift chart relating to the dual clutch transmission depicted in Figure 1;

Figure 3 is a schematic depicting a power flow for a first gear ratio of the dual clutch transmission shown in Figure 1;

Figure 4 is a schematic depicting a power flow for a second gear ratio of the dual clutch transmission shown in Figure 1;

Figure 5 is a schematic depicting a power flow for a third gear ratio of the dual clutch transmission shown in Figure 1;

Figure 6 is a schematic depicting a power flow for a fourth gear ratio of the dual clutch transmission shown in Figure 1;

Figure 7 is a schematic depicting a power flow for a fifth gear ratio of the dual clutch transmission shown in Figure 1;

Figure 8 is a schematic depicting a power flow for a sixth gear ratio of the dual clutch transmission shown in Figure 1;

Figure 9 is a schematic depicting a power flow for a seventh gear ratio of the dual clutch transmission shown in Figure 1;

Figure 10 is a schematic depicting a power flow for an eighth gear ratio of the dual clutch transmission shown in Figure 1;

Figure 11 is a schematic depicting a power flow for a first reverse gear ratio of the dual clutch transmission shown in Figure 1;

Figure 12 is a schematic depicting a power flow for a second reverse gear ratio of the dual clutch transmission shown in Figure 1;

Figure 13 is a schematic depicting a seven speed dual clutch transmission;

Figure 14 is a shift chart relating to the seven speed dual clutch transmission in Figure 13;

Figure 15 is a schematic depicting a dual clutch transmission having an input driving a carrier of a planetary gearset;

Figure 16 is a schematic depicting a dual clutch transmission associated with an alternate final drive unit;

Figure 17 is a schematic depicting another dual clutch transmission having an alternate speed gearset arrangement;

Figure 18 is a schematic depicting a six speed dual clutch transmission; and

Figure 19 is a gear ratio, ratio step and shift chart relating to the six speed dual clutch transmission depicted in Figure 18.

### DETAILED DESCRIPTION

The following description is merely exemplary in nature and is not intended to limit the present disclosure, application, or uses. It should be understood that throughout the drawings, corresponding reference numerals indicate like or corresponding parts and features.

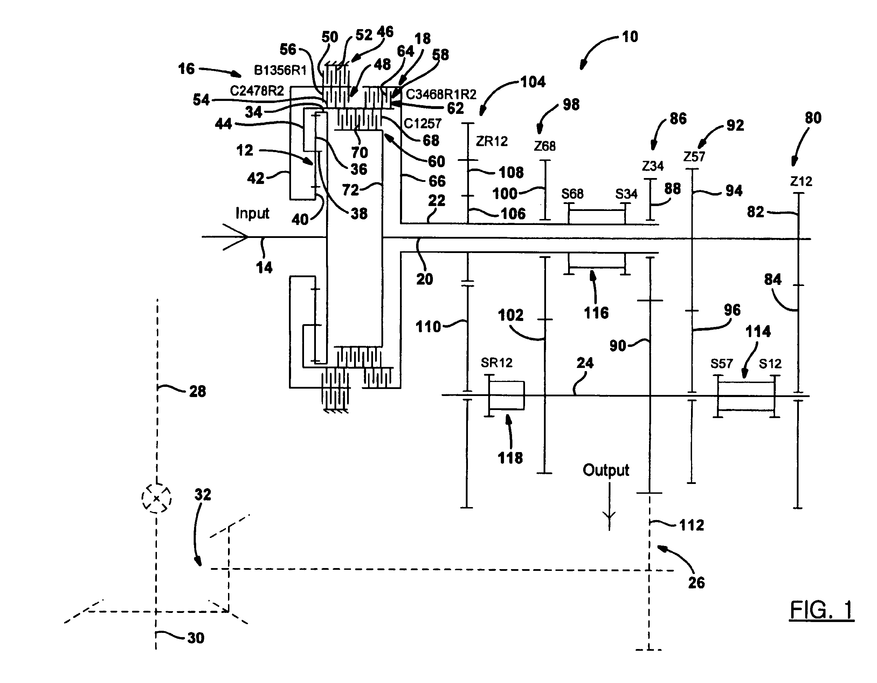

Figure 1 is a schematic representing a dual clutch transmission 10 having a planetary gearset 12 driven by a main shaft 14. Output from planetary gearset 12 is provided to a combination clutch/brake 16 as well as a dual clutch 18. A first input shaft 20 and a second input shaft 22 may be selectively driven by planetary gearset 12 via the combination clutch/brake 16 or dual clutch 18. A plurality of speed gearsets are selectively operable to transfer torque from one of first input shaft 20 and second input shaft 22 to a countershaft 24. Torque is transferred from countershaft 24 to a final drive unit 26 via one of the speed gears coupled thereto.

Final drive unit 26 may be arranged to provide torque to first and second axle shafts 28, 30. The dual clutch transmission of Figure 1 may be longitudinally arranged within a vehicle. As such, final drive unit 26 includes a hypoid or spiral bevel gearset 32 to change the direction of power flow to rotate transversely extending first and second axle shafts 28, 30.

Planetary gearset 12 includes a ring gear 34 fixed to main shaft 14, a plurality of pinion gears 36 rotatably supported on a carrier 38 and a sun gear 40. Sun gear 40 is meshingly engaged with each of pinion gears 36. Similarly, ring gear 34 is meshingly engaged with each of pinion gears 36.

A drum 42 of clutch/brake 16 is fixed to sun gear 40. A common hub and drum 44 is fixed to carrier 38. Combination clutch/brake 16 includes a brake 46 and a first clutch 48. A set of inner brake plates 50 are fixed for rotation with drum 42 but may axially move thereto. Brake 46 includes a set of outer brake plates 52 interleaved with inner brake plates 50. Outer brake plates 52 are fixed to ground and axially moveable. An actuator (not shown) may selectively frictionally engage inner brake plates 50 with outer brake plates 52 to restrict drum 42 from rotation.

A set of inner first clutch plates 54 are fixed for rotation with common hub and drum 44. A set of outer first clutch plates 56 are fixed for rotation with drum 42 on an opposite side from inner brake plates 50. Each of the inner and outer first clutch plates 54 and 56 are axially moveable. Inner first clutch plates 54 are interleaved with outer first clutch plates 56 such that upon operation of an actuator (not shown), the inner and outer first clutch plates 54, 56 frictionally engage one another and transfer torque through first clutch 48. Some of inner brake plates 50 axially overlap outer first clutch plates 56 to reduce the overall length of clutch/brake 16.

Dual clutch 18 includes a second clutch 58 and a third clutch 60. Common hub and drum 44 acts as the hub of second clutch 58 and the drum of third clutch 60 as well as the hub of first clutch 48. A set of inner second clutch plates 62 are fixed for rotation with common hub and drum 44 but may axially move relative thereto. A set of outer second clutch plates 64 are interleaved with inner second clutch plates 62. Outer second clutch plates 64 are fixed for rotation with a drum or housing 66 and axially moveable. Housing 66 is fixed for rotation with second input shaft 22.

Third clutch 60 includes a set of outer third clutch plates 68 fixed for rotation with common hub and drum 44 as well as a set of inner third clutch plates 70 fixed for rotation with a hub 72. Hub 72 is fixed for rotation with first input shaft 20. Some of outer third clutch plates 68 axially overlap inner second clutch plates 62. Some of outer third clutch plates 68 also axially overlap inner first clutch plates 54 to minimize the overall length of dual clutch 18 as well as efficiently package clutch/brake 16 with dual clutch 18.

At least a portion of first input shaft 20 rotates inside of second input shaft 22. Each of first input shaft 20 and second input shaft 22 share the common axis of rotation. Countershaft 24 is spaced apart from first input shaft 20 and second input shaft 22 and rotates along an axis substantially parallel to and offset from a common axis of rotation of first input shaft 20 and second input shaft 22. Second clutch 58 and third clutch 60 may be independently operated from one another using a common or individual actuators (not shown).

A first speed gearset 80 includes a first driving gear 82 fixed to first input shaft 20. First speed gearset 80 may selectively provide first and second gear speed ratios. A first driven gear 84 is in driving engagement with first driving gear 82 and supported for rotation on countershaft 24. A second speed gearset 86 includes a driving gear 88 supported for rotation on second input shaft 22. A second driven gear 90 is fixed to countershaft 24 and is in engagement with driving gear 88. Second speed gearset 86 is operable to selectively provide third and fourth gear ratios. A third speed gearset 92 includes a third driving gear 94 fixed to first input shaft 20. A third driven gear 96 is supported for rotation on countershaft 24 and is in driving engagement with driving gear 94. Third speed gearset 92 may selectively provide fifth and seventh gear drive ratios. A fourth speed gearset 98 selectively provides sixth and eighth speed forward gear ratios. Fourth speed gearset 98 includes a fourth driving gear 100 supported for rotation on second input shaft 22. A fourth driven gear 102 is fixed to countershaft 24 and meshingly engaged with driving gear 100.

A reverse speed gearset 104 includes a reverse driving gear 106 fixed to second input shaft 22, an reverse idler gear 108 meshingly engaged with reverse driving gear 106 and a reverse driven gear 110. Reverse driven gear 110 is rotatably supported on countershaft 24 and in driving engagement with reverse idler gear 108. To transfer torque out of dual clutch transmission 10, second driven gear 90 is drivingly engaged with a transfer gear 112 of final drive unit 26.

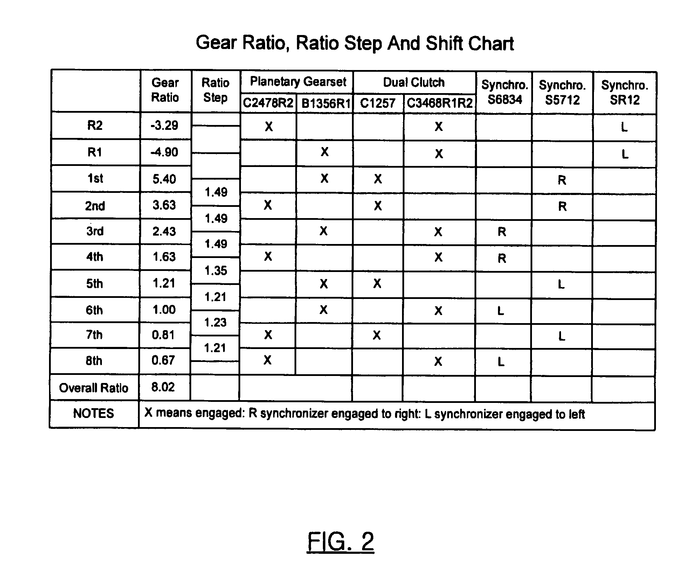

To achieve the various drive gear ratios, first, second and third synchronizers 114, 116 and 118 are provided. The operation of synchronizers 114, 116 and 118 will be described in detail in relation to Figures 2-12 where the power flow through dual clutch transmission 10 will be described for each of the drive ratios provided.

Figure 2 provides one example of a gear ratio, ratio step and shift chart depicting eight forward drive ratios and two reverse drive ratios available through various actuation modes of brake 46, first clutch 48, second clutch 58 and third clutch 60 as well as first, second and third synchronizers 114, 116 and 118, respectively.

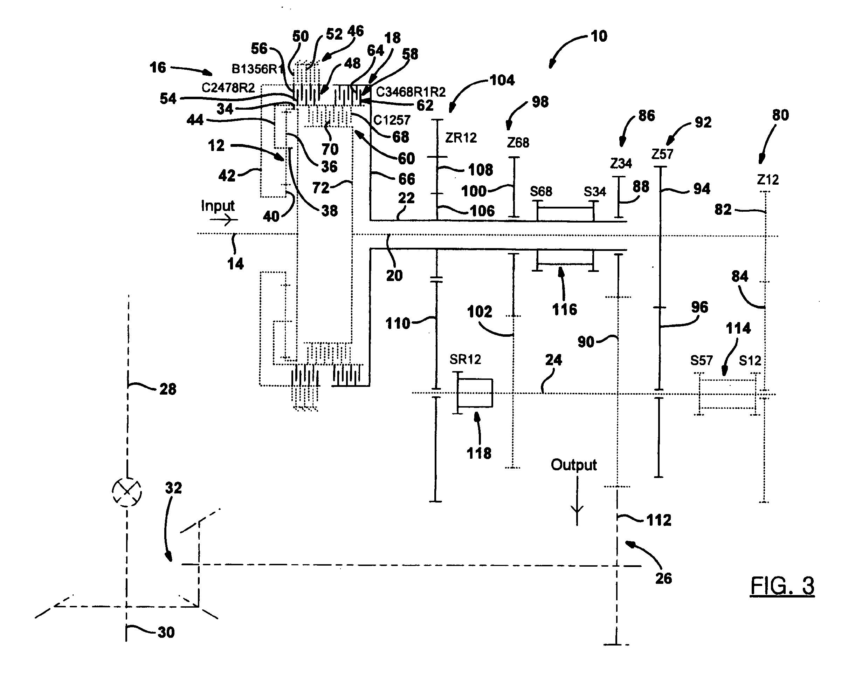

Figure 3 depicts the power flow for the first gear ratio where dotted lines indicate power flowing through various components. The first gear ratio is provided by transferring torque from main shaft 14 through planetary gearset 12 while brake 46 is engaged. As such, sun gear 40 is restricted from rotation and the output from planetary gearset 12 is taken from carrier 38. Third clutch 60 is engaged to transfer torque from common hub and drum 44 to hub 72 and first input shaft 20. First synchronizer 114 is translated to the right as shown in the Figures to fix first driven gear 84 for rotation with countershaft 24. Torque is transferred to final drive unit 26 via second driven gear 90. It should be appreciated that a power shift from first gear to second gear may occur even though speed gears relating to first gear and second gear are both fixed to first input shaft 20.

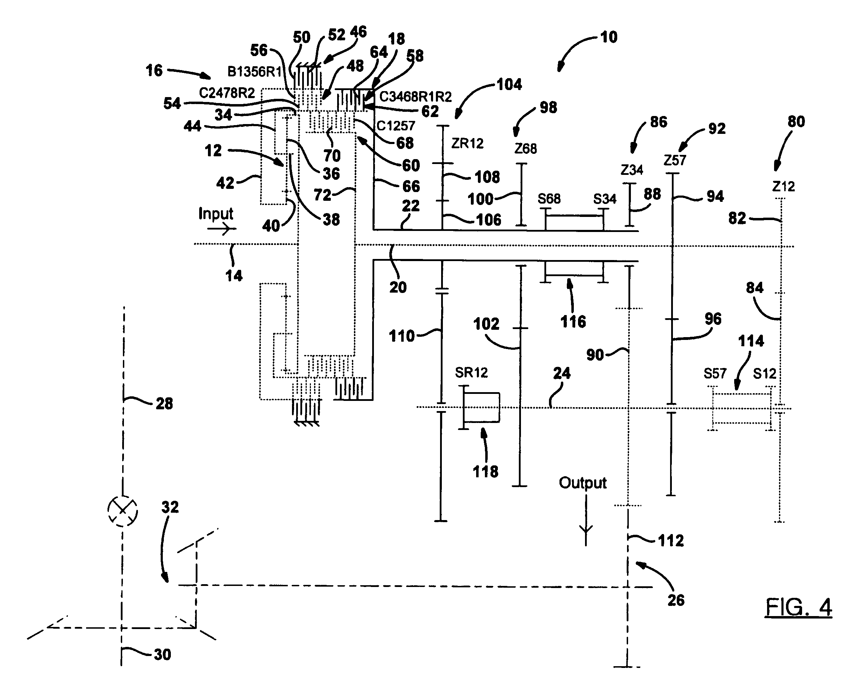

Figure 4 depicts the power flow for second gear where first synchronizer 114 remains engaged to transfer torque between first driven gear 84 and countershaft 24. To accomplish the shift, brake 46 is released and first clutch 48 is engaged. There is a time overlap between releasing the brake 46 and engaging clutch 48 at shifting, so no power interruption occurs. When first clutch 48 is engaged, sun gear 40 and carrier 38 are fixed for rotation with one another. Torque is transferred through common hub and drum 44 through third clutch 60 to first input shaft 20 through first speed gearset 80 and output from second driven gear 90. The shift is a clutch-to-clutch type power shift where torque output to final drive unit 26 is not interrupted.

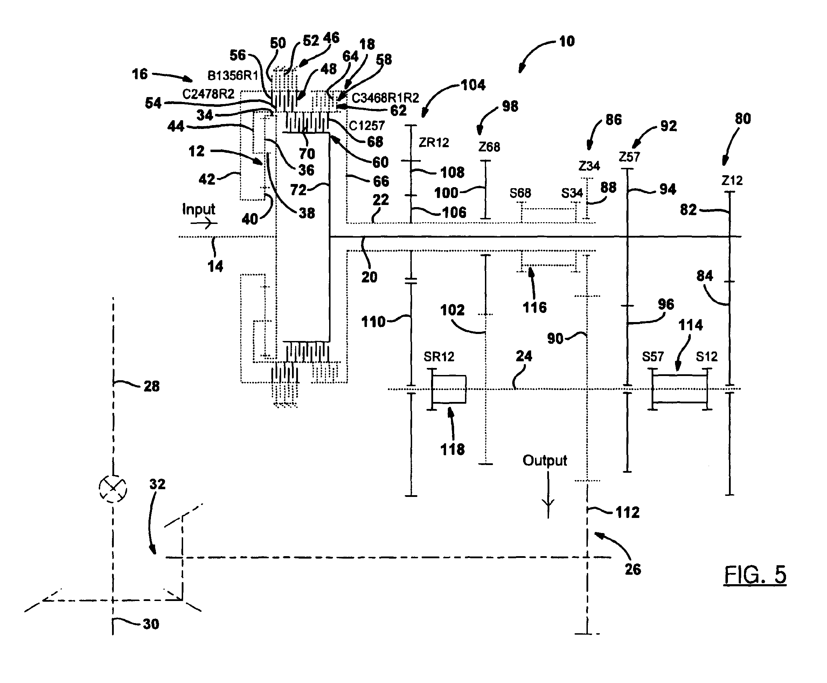

Figure 5 depicts the power flow through dual clutch transmission 10 for third gear. A shift from second gear to third gear includes pre-selecting the second synchronizer 116 to the right side to couple second drive gear 88 and second input shaft 22. Double-swap shifting between brake 46 and first clutch 48 and between second clutch 58 and third clutch 60 occurs. There are time overlaps between the clutches and brake releasing and engaging. Next, the synchronizer 114 is disengaged to the neutral position. No power interruption occurs during shifting from second gear to third gear. Torque is transferred from main shaft 14, through planetary gearset 12 while brake 46 is engaged. As such, sun gear 40 is restricted from rotation. Carrier 38 provides the output from planetary gearset 12 to drive common hub and drum 44. Torque is transferred through second clutch 58 to second input shaft 22. Second speed gearset 86 transfers torque out of dual clutch transmission 10.

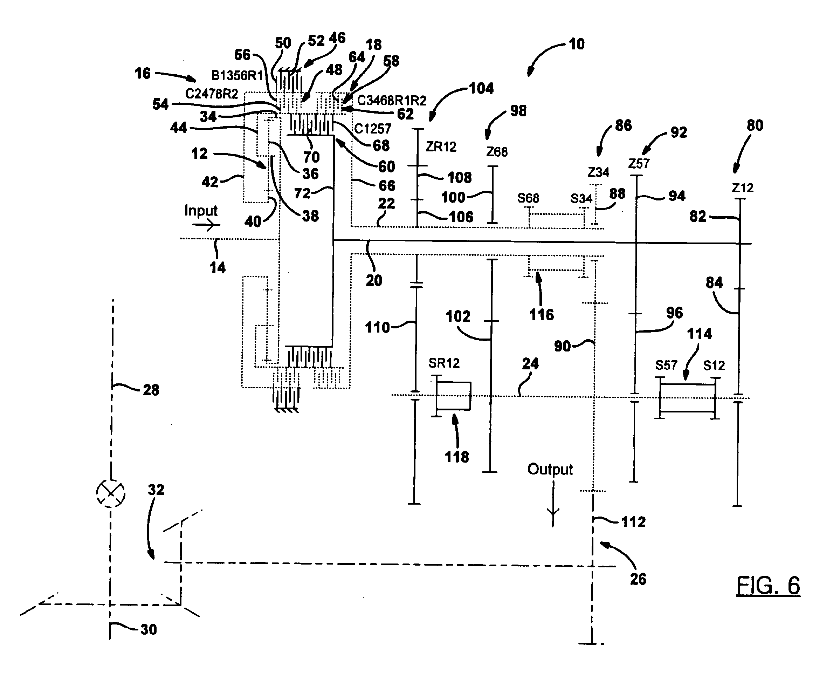

With reference to Figure 6, the power flow through dual clutch transmission 10 is shown for the fourth gear ratio. It should be appreciated that second synchronizer 116 remains in the same position for the third and fourth gears drivingly connecting second driving gear 88 with second input shaft 22. The third gear to fourth gear shift is accomplished by releasing brake 46 and engaging first clutch 48. There is also a time overlap between releasing the brake 46 and engaging the first clutch 48. Torque is transferred from common hub and drum 44 through second clutch 58 to second input shaft 22. The second speed gearset 86 transfers torque out of dual clutch transmission 10 via second synchronizer 116.

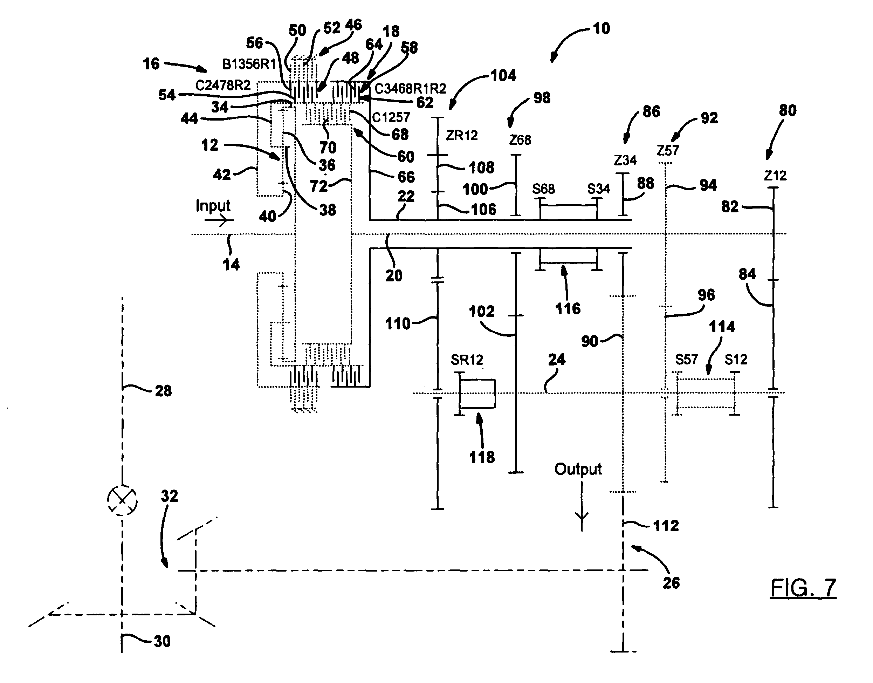

Figure 7 depicts the power flow for the fifth gear ratio. First synchronizer 114 is pre-selected by indexing to the left to drivingly couple third driven gear 96 with countershaft 24. Subsequently, double-swap shifting between brake 46 and first clutch 48 and between second clutch 58 and third clutch 60 occurs. There are time overlaps between engagement and disengagement of the clutches and brake. Then second synchronizer 116 is disengaged to a neutral position. Torque is transferred from main shaft 14 through planetary gearset 12 while sun gear 40 is restricted from rotation by brake 46. Common hub and drum 44 is drivingly coupled to hub 72 by third clutch 60. First input shaft 20 provides drive torque to third speed gearset 92. Torque continues to be transferred through first synchronizer 114 and exits dual clutch transmission 10 through second driven gear 90.

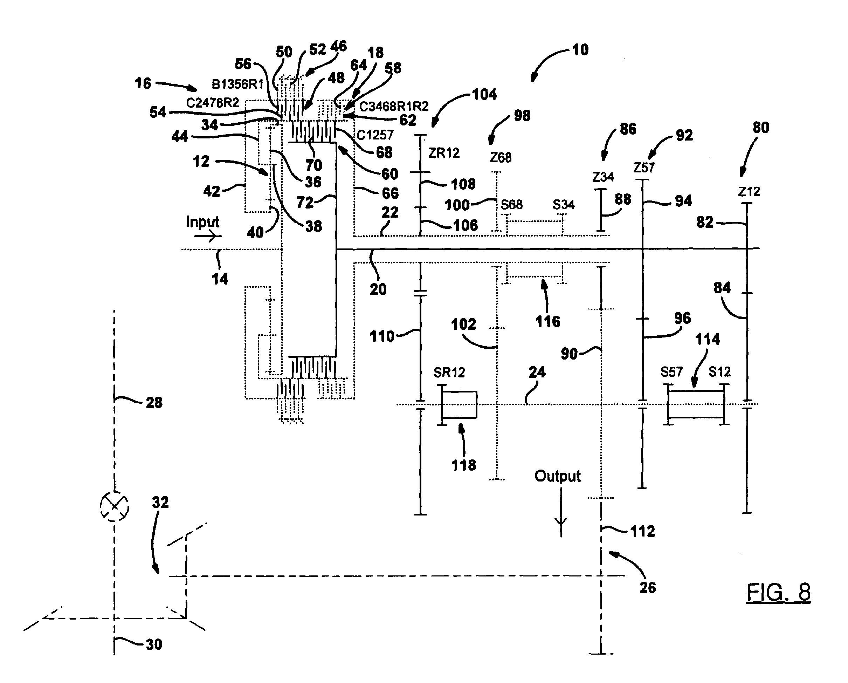

Figure 8 represents the power flow for the sixth gear ratio. To shift from fifth gear to sixth gear, firstly, second synchronizer 116 is pre-selected to shift to the left to drivingly couple fourth driving gear 100 with second input shaft 22. Then, the third clutch 60 is released at the same time the second clutch 58 is engaged. Finally, the first synchronizer 114 is placed in the neutral position so no power interruption occurs during the shift from fifth gear to sixth gear. Power is transferred from main shaft 14 through planetary gearset 12 while sun gear 40 is restricted from rotation by brake 46. Carrier 38 and common hub and drum 44 transfer torque to second input shaft 22 via second clutch 58. Second synchronizer 116 transfers power to fourth speed gearset 98. Countershaft 24 rotates second driven gear 90 to output torque from dual clutch transmission 10.

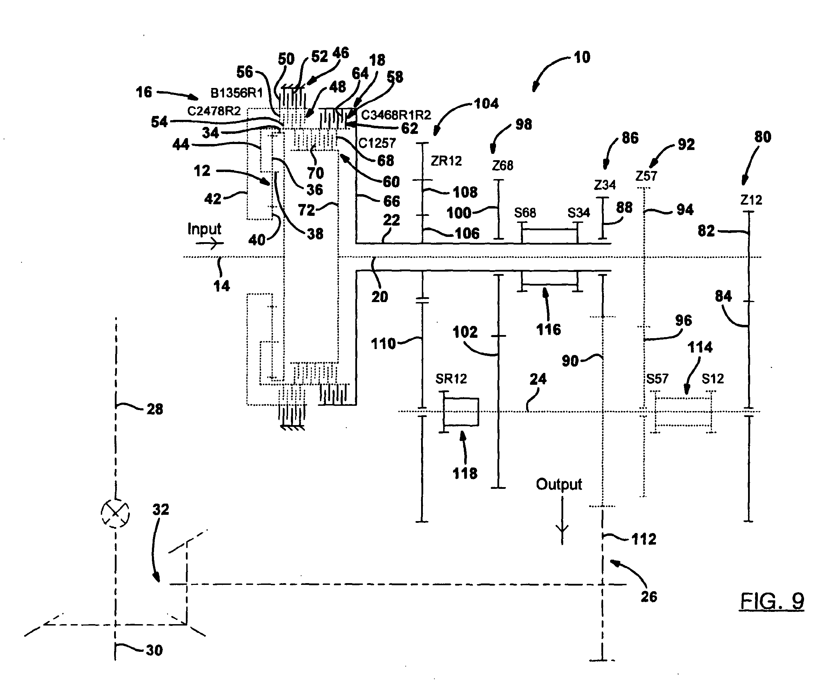

Figure 9 shows the seventh gear having pre-selected first synchronizer 114 shifted to the left to drivingly couple third driven gear 96 and countershaft 24. A double-swap shift is completed between brake 46 and first clutch 48 and between second clutch 58 and third clutch 60. There are time overlaps between the clutches and brake releasing and engaging. Finally, the second synchronizer 116 is disengaged to the neutral position so no power interruption occurs during shifting from sixth gear to seventh gear. Power transfers from main shaft 14 through planetary gearset 12 through first clutch 48 and third clutch 60 to drive first input shaft 20. Third speed gearset 92 is driven and provides torque to countershaft 24 through first synchronizer 114. Power exits dual clutch transmission 10 at second driven gear 90.

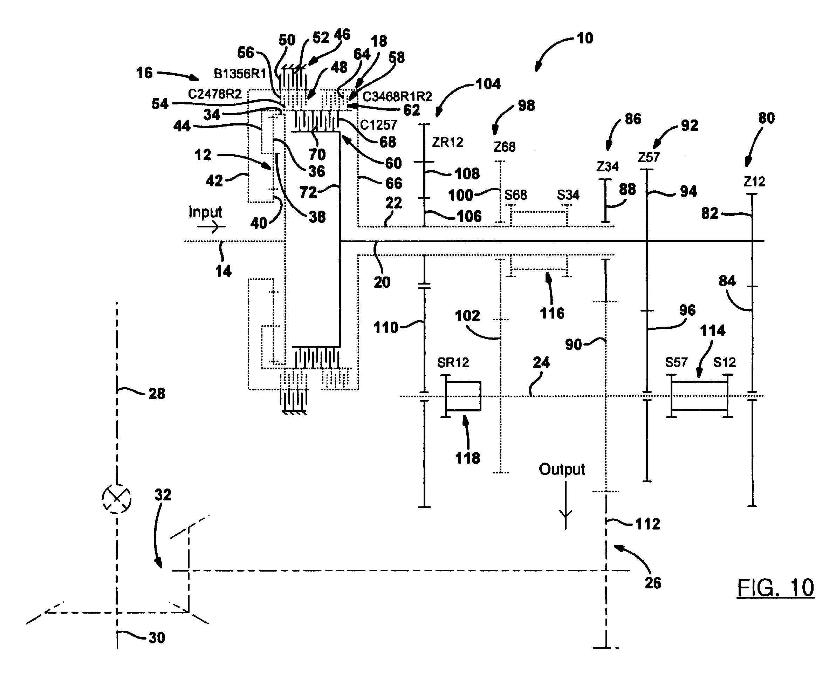

Figure 10 represents the eighth gear power flow. To shift from seventh gear to eighth gear, second synchronizer 116 is pre-selected to shift to the left to drivingly couple fourth driving gear 100 and second input shaft 22. Then, third clutch 60 is disengaged at the same time second clutch 58 is engaged. There is a time overlap between the two clutches disengaging and engaging. Finally, the first synchronizer 114 is disengaged. As such, power transfers through main shaft 14, planetary gearset 12, first clutch 48, second clutch 58, second input shaft 22, second synchronizer 116, fourth speed gearset 98, countershaft 24 and second driven gear 90.

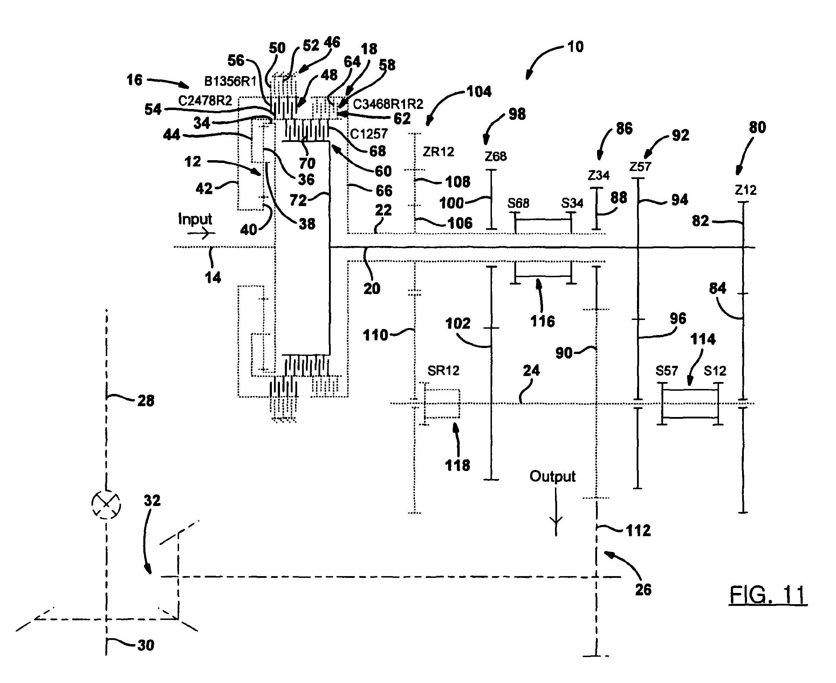

A first reverse gear power flow is depicted in Figure 11. Third synchronizer 118 is shifted to the left to drivingly couple reverse driven gear 110 and countershaft 24. Power flows through dual clutch transmission 10 via main shaft 14 and planetary gearset 12 where sun gear 40 is restricted from rotation by brake 46. Second clutch 58 transfers torque from common hub and drum 44 to second input shaft 22. Reverse driving gear 106 is fixed to second input shaft 22 and provides torque to reverse idler gear 108. Power flows from reverse idler gear 108 to reverse driven gear 110. Third synchronizer 118 transfers torque to countershaft 24 and second driven gear 90 outputs torque from dual clutch transmission 10.

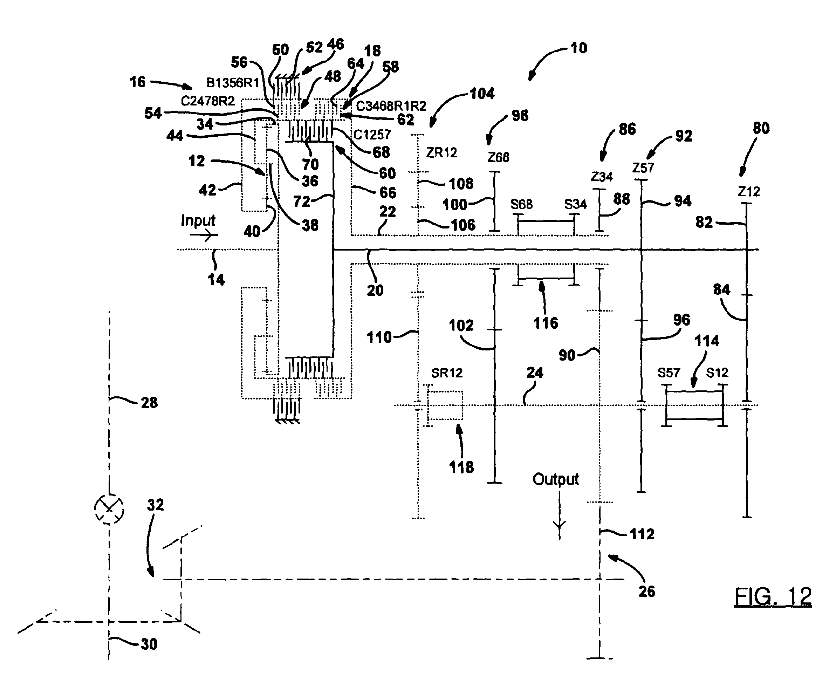

Figure 12 shows a second reverse gear power flow where third synchronizer 118 remains in its left engaged position. The first reverse gear to second reverse gear shift is accomplished by disengaging brake 46 and engaging first clutch 48 with a time overlap. Accordingly, power flows through main shaft 14, planetary gearset 12, carrier 38, common hub and drum 44, first clutch 48, second clutch 58, second input shaft 22, reverse speed gearset 104, third synchronizer 118 and exits through second driven gear 90.

While a sequential upshift has been previously described, the gear arrangement of dual clutch transmission 10 allows a variety of other upshifts or downshifts to quickly occur in a power shift mode. The shifts may be achieved by simultaneously engaging and disengaging one or more of brake 46, first clutch 48, second clutch 58 and third clutch 60 in accordance with the gear ratio chart shown in Figure 2. For example, the present arrangement of gears shown in Figures 1-12 allow rapid shifting between second gear and fourth gear because first driving gear 82 is fixed to first input shaft 20 while second driving gear 88 is associated with second input shaft 22. In a typical transmission, both the second and fourth gears would be associated with the same input shaft and a clutch-to-clutch shift would not be possible. Other interesting shift patterns include possible rapid shifting between seventh gear and fourth gear and second gear or a shift between eighth gear and second gear. Furthermore, skip shifts from first gear to third gear and first gear to fourth gear may be simply accomplished.

Planetary gearset 12 provides two outputs and effectively doubles the number of final drive ratios available for each speed gearset. When compared with a seven or eight speed dual clutch transmission with one countershaft, dual clutch transmission 10 only adds planetary gearset 12 and eliminates the need for at least two speed gearsets and one synchronizer. The length and weight of the transmission are greatly reduced. When compared with a seven or eight speed traditional dual clutch transmission with two countershafts, dual clutch transmission 10 only adds planetary gearset 12 and eliminates the need for at least two gearsets, one synchronizer and one countershaft. The length and weight of the transmission are greatly reduced in this instance as well.

Furthermore, it should be appreciated that the present arrangement of gears within dual clutch transmission 10 provides relatively large ratio steps between low gears and relatively small ratio steps between high gears. Yet another advantage of the invented dual clutch transmission 10 includes the combination clutch/brake 16 that eliminates the need for at least one clutch housing and one hub. The length of the clutch/brake 16 is also reduced. The reduced number of components and compact packaging of dual clutch transmission 10 is at least partly achieved by utilizing common hub and drum 44 for first clutch 48, second clutch 58 and third clutch 60. The compact arrangement of the clutches and a brake provides a versatile transmission having a reduced number of components, size, weight and cost.

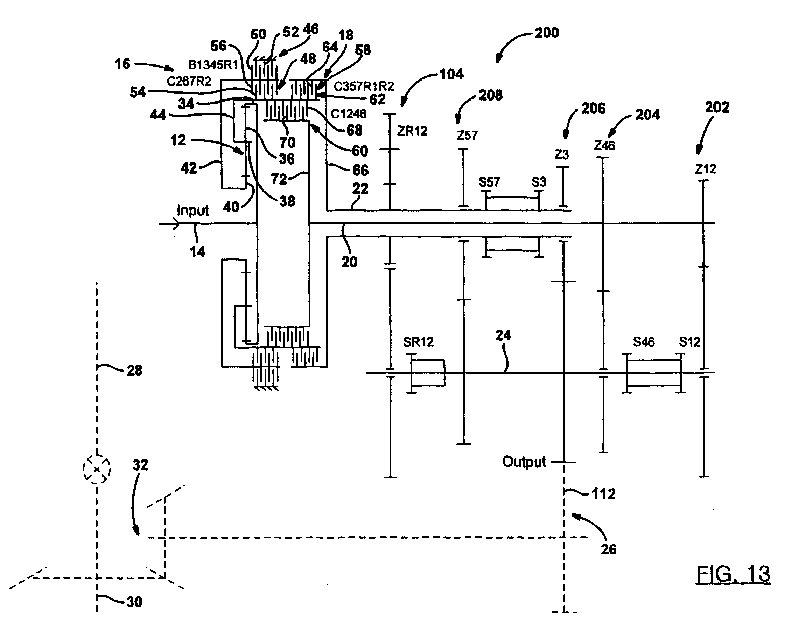

Figure 13 depicts another dual clutch transmission 200 as an example of a seven forward speed transmission constructed substantially similarly to dual clutch transmission 10. Figure 13 represents the ease of providing various speed gearsets associated with one of first input shaft 20 and second input shaft 22. Because dual clutch transmission 200 is substantially similar to dual clutch transmission 10, only the differences will be highlighted. For example, a first speed gearset 202 providing first and second speed gear ratios has one gear associated with first input shaft 20. Similarly, a second speed gearset 204 providing the fourth and sixth gear ratios has a gear driven by first input shaft 20. A third speed gearset 206 provides the third gear ratio, which has a speed gear supported for rotation on second input shaft 22. A fourth speed gearset 208 provides fifth and seventh gear ratios and one of its gears is driven by second input shaft 22. The arrangement is also different from the conventional dual clutch transmission arrangement with odd number gear ratios connecting one input shaft and even number gear ratios connecting another input shaft. In the arrangement of gears for dual clutch transmission 200, it is contemplated that relatively quick clutch-to-clutch shifts may be completed when shifting between first and third gear, first and fifth gear, first and seventh gear, second and fifth gear, second and seventh gear, third and sixth gear and fourth and seventh gear.

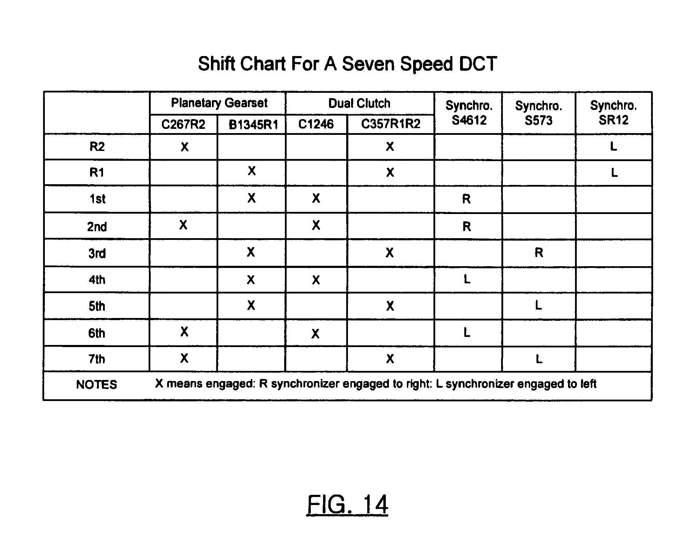

Figure 14 provide an example of a shift chart depicting seven forward drive ratios and two reverse drive ratios available through various actuation modes of brake 46, first clutch 48, second clutch 58 and third clutch 60 as well as the first, second and third synchronizers of transmission 200.

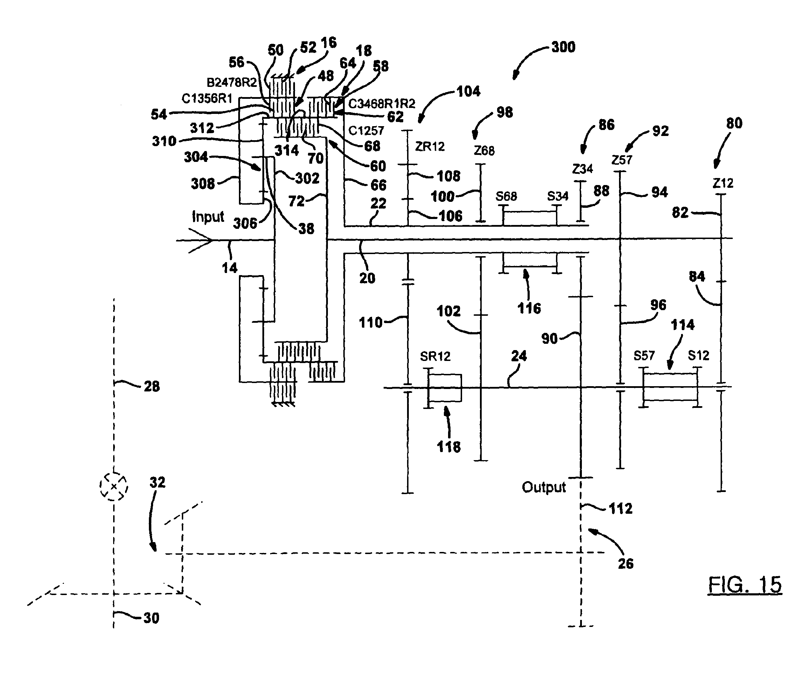

Figure 15 depicts another dual clutch transmission 300. Dual clutch transmission 300 is substantially similar to dual clutch transmission 10. Accordingly, like elements will retain their previously introduced reference numerals. Dual clutch transmission 300 differs from dual clutch transmission 10 in that main shaft 14 is coupled to a carrier 302 of a planetary gearset 304. A sun gear 306 is fixed to a drum 308 that functions as a common hub and drum for clutch/brake 16. Pinion gears 310 are rotatably supported by carrier 302 and meshingly engage sun gear 306 and a ring gear 312. Ring gear 312 is fixed to a common hub and drum 314. The common hub and drum 314 functions substantially similarly to the common hub and drum 44 depicted and described in relation to Figures 1-12. Because main shaft 14 is fixed to carrier 302, planetary gearset 304 provides an increased speed output from the engine as opposed to the arrangement depicted in Figure 1 providing a decreased output speed relative to the engine.

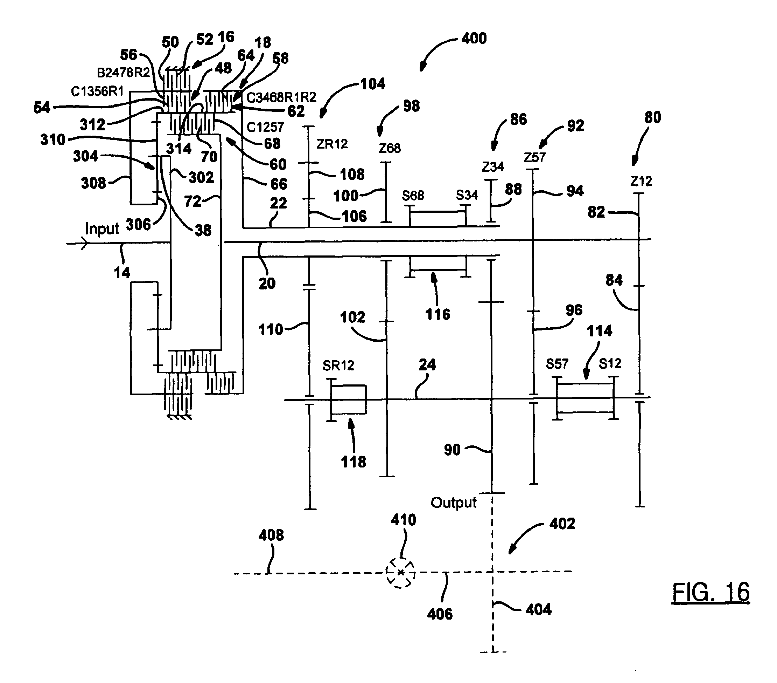

Figure 16 depicts another dual clutch transmission 400 configured substantially similarly to dual clutch transmission 300. Accordingly, like elements will retain their previously introduced reference numerals. It is contemplated that dual clutch transmission 400 may be positioned in a transverse vehicle orientation. Accordingly, a final drive unit 402 is shown to include a final drive gear 404 in meshed engagement with second driven gear 90. Final drive gear 404 is fixed to a first transversely oriented axle shaft 406. A second transversely oriented axle shaft 408 is drivingly coupled to first axle shaft 406 by a differential 410.

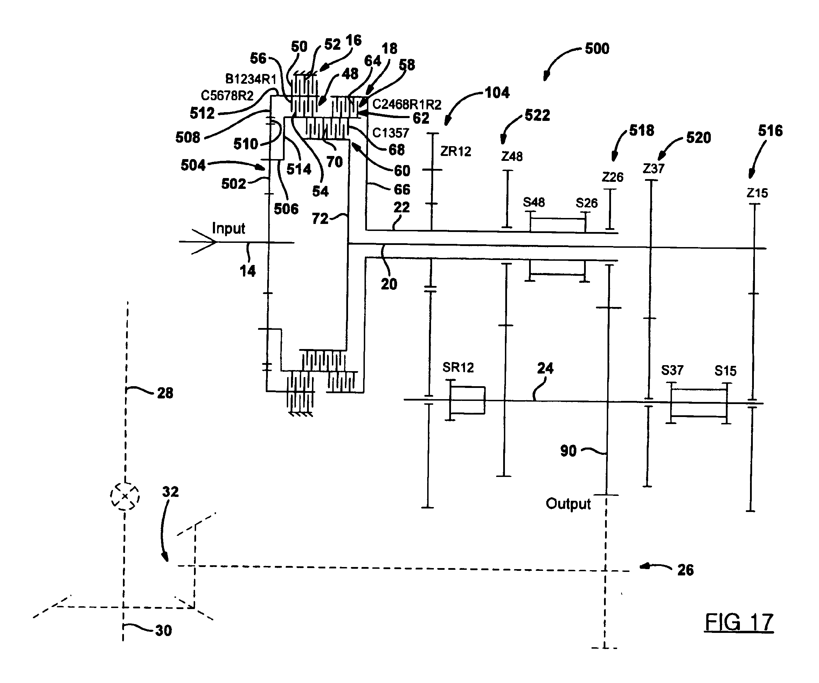

Figure 17 illustrates another dual clutch transmission identified by reference numeral 500. Dual clutch transmission 500 is substantially similar to the previously introduced dual clutch transmissions but illustrates that even numbered speed gears may be coupled to one of the input shafts while odd numbered speed gears are driven by the other input shaft. In particular, dual clutch transmission 500 includes main shaft 14 fixed to a sun gear 502 of a planetary gearset 504. A carrier 506 rotatably supports pinion gears 508 that are in meshed driving engagement with sun gear 502 and a ring gear 510. Ring gear 510 is fixed for rotation with a drum 512 that functions as a combination hub and drum for clutch/brake 16. Carrier 506 is fixed to a combination hub and drum 514 and performs substantially similarly to common hub and drum 44 depicted in Figure 1.

A first speed gearset 516 provides first and fifth gear ratios being driven by first input shaft 20. A second speed gearset 518 provides the second and sixth drive ratios. Second input shaft 22 drives second speed gearset 518. A third speed gearset 520 provides the third and seventh drive ratios. First input shaft 20 drives third speed gearset 520. A fourth speed gearset 522 provides the fourth and eighth gear ratio. Second input shaft 22 provides input torque for fourth speed gearset 522.

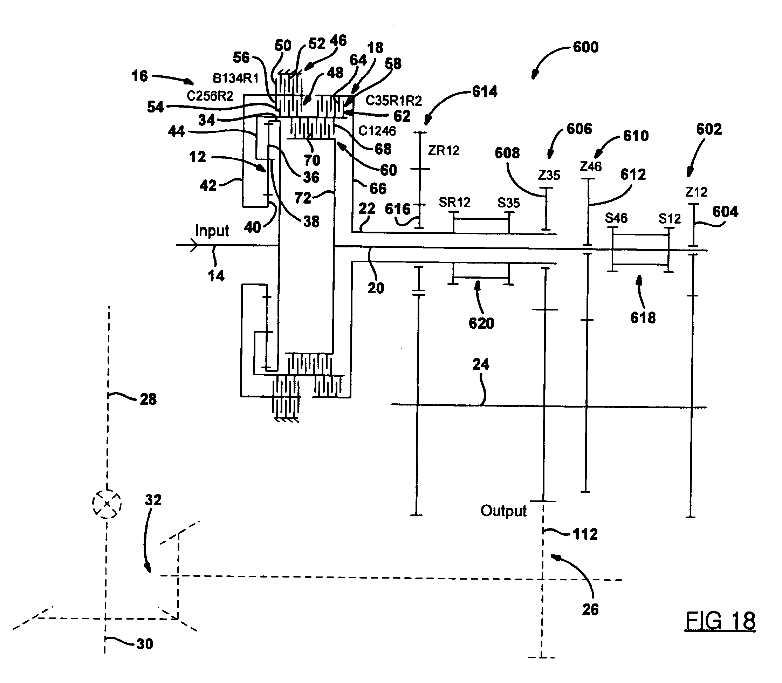

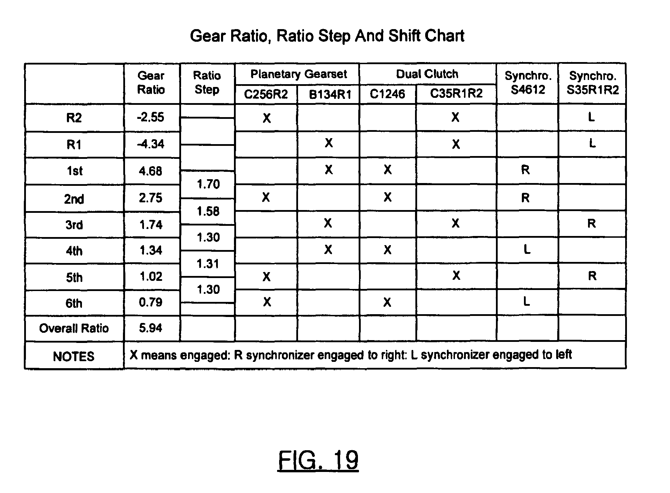

Figure 18 depicts a dual clutch transmission 600 as an example of a six forward speed transmission. Transmission 600 is substantially similar to transmission 200 and like elements will retain their previously introduced reference numerals. A first speed gearset 602 provides first and second speed gear ratios and includes a driving gear 604 rotatably supported on first input shaft 20. A second speed gearset 606 provides the third and fifth speed gear ratios and includes a driving gear 608 rotatably supported on second input shaft 22. A third speed gearset 610 selectively provides the fourth and sixth speed gear ratios and includes a driving gear 612 rotatably supported on first input shaft 20. A reverse gearset 614 includes a reverse driving gear 616 rotatably supported on second input shaft 22. Each of the driven gears of speed gearsets 602, 606, 610 and 614 is fixed to countershaft 24. A first synchronizer 618 is selectively operable to drivingly interconnect driving gear 604 or driving gear 612 with first input shaft 20. A second synchronizer 620 is selectively operable to drivingly interconnect driving gear 608 or reverse driving gear 616 with second input shaft 22. Figure 19 provides a gear ratio, ratio step and shift chart relating to dual clutch transmission 600.

## Claims

1. A transmission (10; 200; 300; 400; 500; 600) comprising:
a first input shaft (20);
a second input shaft (22);
a planetary gearset (12; 12; 304; 304; 504; 12) having an input (14), a first output (40; 40; 306; 306; 508; 40) and a second output (38; 38; 312; 312; 506; 38),
the first output being in communication with a brake (46) and a first clutch (48),
the second output being in communication with the first clutch (48), a second clutch (58) and a third clutch (60),
the first clutch (48) selectively drivingly coupling the first output and the second output,
the brake (46) selectively restricting rotation of the first output,
a first speed gearset (80; 202; 80; 80; 516; 602) driven by the first input shaft (20); and
a second speed gearset (86; 206; 86; 86; 518; 606) driven by the second input shaft (22),
**characterized in that**
the second clutch (58) is selectively drivingly coupling the second output and the second input shaft (22), and
**in that** the third clutch (60) is selectively drivingly coupling the second output and the first input shaft (20).

2. The transmission (10; 200; 600) of claim 1 wherein the first output is a sun gear (40; 40; 40) and the second output is a carrier (38; 38; 38).

3. The transmission (500) of claim 1 wherein the first output is a ring gear (508) and the second output is a carrier (506).

4. The transmission (300; 400) of claim 1 wherein the first output is a sun gear (306; 306) and the second output is a ring gear (312; 312).

5. The transmission of one of the preceding claims, wherein the first and second input shafts (20; 22) rotate about a common axis.

6. The transmission of claim 5 wherein the first and second input shafts (20; 22) axially overlap one another.

7. The transmission of one of the preceding claims, further including a first common hub and drum (42; 42; 308; 308; 512; 42) fixed for rotation with brake plates (50) forming a portion of the brake (46) and first clutch plates (56) forming a portion of the first clutch (48).

8. The transmission of one of the preceding claims, further including second common hub and drum (44; 44; 314; 314; 514; 44) fixed for rotation with additional clutch first clutch plates (54) forming another portion of the first clutch (48), second clutch plates (62) forming a portion of the second clutch (58) and third clutch plates (68) forming a portion of the third clutch (60).

9. The transmission of claim 8 wherein a portion of the third clutch (60) axially overlaps the second clutch (58).

10. The transmission of claim 8 or 9 wherein a portion of the third clutch (60) axially overlaps the first clutch (48).

11. The transmission (10; 200; 300; 400; 500; 600) according to claim 1, wherein
the first output is fixed for rotation with a first common hub and drum (42; 42; 308; 308; 512; 42) associated with the brake (46) and the first clutch (48), and
the second output is fixed for rotation with a second common hub and drum (44; 44; 314; 314; 514; 44) associated with the first clutch (48), the second clutch (58) and the third clutch (60),
the first clutch (48) selectively drivingly coupling the first common hub and drum and the second common hub and drum,
the second clutch (58) selectively drivingly coupling the second common hub and drum and the second input shaft (22), and
the third clutch (60) selectively drivingly coupling the second common hub and drum and the first input shaft (20).

12. The transmission of claim 11 wherein the first common hub and drum has a plurality of brake plates (50) fixed for rotation on a first side thereof and a plurality of first clutch plates (56) on an opposite side.

13. The transmission of claim 12 wherein at least some of the plurality of brake plates (50) and the plurality of first clutch plates (56) axially overlap each other.

14. The transmission of one of claims 11 to 13, wherein the first clutch (48) and the second clutch (58) each have clutch plates (54, 62) fixed for rotation with the second common hub and drum on a first side thereof, the third clutch (60) having clutch plates (68) fixed for rotation on an opposite side of the second common hub and drum.

15. The transmission of claim 14 wherein at least some of the second clutch plates (62) axially overlap some of the third clutch plates (68).

16. The transmission of claim 14 or 15 wherein the third clutch plates (68) axially overlap some of the first clutch plates (54).

17. The transmission of one of claims 11 to 16 wherein the first and second input shafts (20; 22) rotate about a common axis.

18. The transmission of claim 17 wherein the first and second input shafts (20; 22) axially overlap one another.

19. The transmission (10; 200; 300; 400; 600) of claim 11 wherein the first speed gearset (80; 202; 80; 80; 516; 602) transfers torque for first and second gear ratios.

20. The transmission (10; 300; 400) of claim 19 wherein the second speed gearset (86; 86; 86) transfers torque for third and fourth gear ratios.

21. The transmission (600) of claim 19 wherein the second speed gearset (606) transfers torque for third and fifth gear ratios.

22. The transmission (10; 300; 400; 500) of claim 11 further including a third speed gearset (92; 92; 92; 520) driven by the first input shaft (20) and a fourth speed gearset (98; 98; 98; 522) driven by the second input shaft (22) to provide eight forward speed ratios.

23. The transmission (10; 200; 300; 400) of claim 11 wherein even numbered and odd numbered gear ratios are provided by one of the first, second, a third and a fourth speed gearsets.

## Patentansprüche

1. Getriebe (10, 200, 300, 400, 500, 600), das umfasst:
eine erste Eingangswelle (20);
eine zweite Eingangswelle (22);
einen Planetenradsatz (12; 12; 304; 304; 504; 12) mit einem Eingang (14), einem ersten Ausgang (40; 40; 306; 306; 508; 40) und einem zweiten Ausgang (38; 38; 312; 312; 506; 38),
wobei der erste Ausgang mit einer Bremse (46) und einer ersten Kupplung (48) in Verbindung steht,
der zweite Ausgang mit der ersten Kupplung (48), einer zweiten Kupplung (58) und einer dritten Kupplung (60) in Verbindung steht,
die erste Kupplung (48) selektiv den ersten Ausgang und den zweiten Ausgang antreibend koppelt,
die Bremse (46) selektiv Drehung des ersten Ausgangs einschränkt,
einen Zahnradsatz (80; 202; 80; 80; 516; 602) für den ersten Gang, der von der ersten Eingangswelle (20) angetrieben wird; und
einen Zahnradsatz (86; 206; 86; 86; 518; 605) für den zweiten Gang, der von der zweiten Eingangswelle (22) angetrieben wird,
**dadurch gekennzeichnet, dass**
die zweite Kupplung (58) selektiv den zweiten Ausgang und die zweite Eingangswelle (22) antreibend koppelt, und
die dritte Kupplung (60) selektiv den zweiten Ausgang und die erste Eingangswelle (20) antreibend koppelt.

2. Getriebe (10, 200, 600) nach Anspruch 1, wobei der erste Ausgang ein Sonnenrad (40; 40; 40) ist und der zweite Ausgang ein Träger (38; 38; 38) ist.

3. Getriebe (500) nach Anspruch 1, wobei der erste Ausgang ein Hohlrad (508) ist und der zweite Ausgang ein Träger (506) ist.

4. Getriebe (300, 400) nach Anspruch 1, wobei der erste Ausgang ein Sonnenrad (306; 306) ist und der zweite Ausgang ein Hohlrad (312; 312) ist.

5. Getriebe nach einem der vorangehenden Ansprüche, wobei sich die erste und die zweite Eingangswelle um eine gemeinsame Achse drehen.

6. Getriebe nach Anspruch 5, wobei die erste und die zweite Eingangswelle (20; 22) einander axial überlappen.

7. Getriebe nach einem der vorangehenden Ansprüche, das des Weiteren eine erste gemeinsame Nabentrommel (42; 42; 308; 308; 512; 42) enthält, die zur Drehung mit Bremsplatten (50), die einen Teil der Bremse (46) bilden, und ersten Kupplungsplatten (56) befestigt ist, die einen Teil der ersten Kupplung (48) bilden.

8. Getriebe nach einem der vorangehenden Ansprüche, das des Weiteren eine zweite gemeinsame Nabentrommel (44; 44; 314; 314; 514; 44) umfasst, die zur Drehung mit zusätzlichen ersten Kupplungsplatten (54), die einen weiteren Teil der ersten Kupplung (48) bilden, zweiten Kupplungsplatten (62), die einen Teil der zweiten Kupplung (58) bilden, und dritten Kupplungsplatten (68) befestigt ist, die einen Teil der dritten Kupplung (60) bilden.

9. Getriebe nach Anspruch 8, wobei ein Teil der dritten Kupplung (60) die zweite Kupplung (58) axial überlappt.

10. Getriebe nach Anspruch 8 oder 9, wobei ein Teil der dritten Kupplung (60) die erste Kupplung (48) axial überlappt.

11. Getriebe (10, 200, 300, 400, 500, 600) nach Anspruch 1, wobei
der erste Ausgang zur Drehung mit einer ersten gemeinsamen Nabentrommel (42; 42; 308; 308; 512; 42) befestigt ist, die mit der Bremse (46) und der ersten Kupplung (48) verbunden ist, und
der zweite Ausgang zur Drehung mit einer zweiten gemeinsamen Nabentrommel (44; 44; 314; 314; 514; 44) befestigt ist, die mit der ersten Kupplung (48), der zweiten Kupplung (58) und der dritten Kupplung (60) verbunden ist,
die erste Kupplung (48) selektiv die erste gemeinsame Nabentrommel und die zweite gemeinsame Nabentrommel antreibend koppelt,
die zweite Kupplung (58) selektiv die zweite gemeinsame Nabentrommel und die zweite Eingangswelle (22) antreibend koppelt, und
die dritte Kupplung (60) selektiv die zweite gemeinsame Nabentrommel und die erste Eingangswelle (20) antreibend koppelt.

12. Getriebe nach Anspruch 11, wobei die erste gemeinsame Nabentrommel eine Vielzahl von Bremsplatten (50), die zur Drehung an einer ersten Seite derselben befestigt sind, sowie eine Vielzahl erster Kupplungsplatten (56) an einer gegenüberliegenden Seite aufweist.

13. Getriebe nach Anspruch 12, wobei wenigstens einige der Vielzahl von Bremsplatten (50) und der Vielzahl erster Kupplungsplatten (56) einander axial überlappen.

14. Getriebe nach einem der Ansprüche 11 bis 13, wobei die erste Kupplung (48) und die zweite Kupplung (58) jeweils Kupplungsplatten (54, 62) aufweisen, die zur Drehung mit der zweiten gemeinsamen Nabentrommel an einer ersten Seite derselben befestigt sind, und die dritte Kupplung (60) Kupplungsplatten (68) aufweist, die zur Drehung an einer gegenüberliegenden Seite der zweiten gemeinsamen Nabentrommel befestigt sind.

15. Getriebe nach Anspruch 14, wobei wenigstens einige der zweiten Kupplungsplatten (62) einige der dritten Kupplungsplatten (68) axial überlappen.

16. Getriebe nach Anspruch 14 oder 15, wobei die dritten Kupplungsplatten (68) einige der ersten Kupplungsplatten (54) axial überlappen.

17. Getriebe nach einem der Ansprüche 11 bis 16, wobei sich die ersten und die zweiten Eingangswellen (20; 22) um eine gemeinsame Achse herum drehen.

18. Getriebe nach Anspruch 17, wobei die erste und die zweite Eingangswelle (20; 22) einander axial überlappen.

19. Getriebe (10, 200, 300, 400, 600) nach Anspruch 11, wobei der Zahnradsatz (80; 202; 80; 80; 516; 602) für den ersten Gang Drehmoment für ein erstes und ein zweites Übersetzungsverhältnis überträgt.

20. Getriebe (10, 300, 400) nach Anspruch 19, wobei der Zahnradsatz (86; 86; 86) für den zweiten Gang Drehmoment für ein drittes und ein viertes Übersetzungsverhältnis überträgt.

21. Getriebe (600) nach Anspruch 19, wobei der Zahnradsatz (606) für den zweiten Gang Drehmoment für ein drittes und ein fünftes Übersetzungsverhältnis überträgt.

22. Getriebe (10, 300, 400, 500) nach Anspruch 11, das des Weiteren einen Zahnradsatz (92; 92; 92; 520) für den dritten Gang, der von der ersten Eingangswelle (20) angetrieben wird, und einen Zahnradsatz (98; 98; 98; 522) für den vierten Gang enthält, der von der zweiten Eingangswelle (22) angetrieben wird, um acht Vorwärts-Übersetzungen zu erzeugen.

23. Getriebe (10, 200, 300, 400) nach Anspruch 11, wobei geradzahlige und ungeradzahlige Übersetzungsverhältnisse von einem der Zahnradsätze für den ersten, den zweiten, den dritten oder den vierten Gang zur Verfügung gestellt werden.

## Revendications

1. Transmission (10 ; 200 ; 300 ; 400 ; 500 ; 600), comprenant :
un premier arbre d'entrée (20) ;
un second arbre d'entrée (22) ;
un train planétaire (12 ; 12 ; 304 ; 304 ; 504 ; 12) ayant une entrée (14), une première sortie (40 ; 40 ; 306 ; 306 ; 508 ; 40) et une seconde sortie (38 ; 38 ; 312 ; 312 ; 506 ; 38),
la première sortie étant en communication avec un frein (46) et un premier embrayage (48),
la seconde sortie étant en communication avec le premier embrayage (48), un deuxième embrayage (58) et un troisième embrayage (60),
le premier embrayage (48) couplant sélectivement en entraînement la première sortie et la seconde sortie,
le frein (46) restreignant sélectivement la rotation de la première sortie,
un premier train de vitesses (80 ; 202 ; 80 ; 80 ; 516 ; 602) entraîné par le premier arbre d'entrée (20) ; et
un deuxième train de vitesses (86 ; 206 ; 86 ; 86 ; 518 ; 606) entraîné par le second arbre d'entrée (22),
**caractérisée en ce que**
le deuxième embrayage (58) couple sélectivement en entraînement la seconde sortie et le second arbre d'entrée (22), et
**en ce que** le troisième embrayage (60) couple sélectivement en entraînement la seconde sortie et le premier arbre d'entrée (20).

2. Transmission (10 ; 200 ; 600) selon la revendication 1, dans laquelle la première sortie est un roue solaire (40 ; 40 ; 40) et la seconde sortie est un support (38 ; 38 ; 38).

3. Transmission (500) selon la revendication 1, dans laquelle la première sortie est une couronne (508) et la seconde sortie est un support (506).

4. Transmission (300 ; 400) selon la revendication 1, dans laquelle la première sortie est un roue solaire (306 ; 306) et la seconde sortie est une couronne (312 ; 312).

5. Transmission selon l'une des revendications précédentes, dans laquelle les premier et second arbres d'entrée (20 ; 22) tournent autour d'un axe commun.

6. Transmission selon la revendication 5, dans laquelle les premier et second arbres d'entrée (20 ; 22) se chevauchent axialement l'un l'autre.

7. Transmission selon l'une des revendications précédentes, comportant en outre un premier ensemble moyeu et tambour commun (42 ; 42 ; 308 ; 308 : 512 ; 42) fixe pour une rotation avec des plateaux de frein (50), formant une portion du frein (46) et des premiers disques d'embrayage (56) formant une portion du premier embrayage (48).

8. Transmission selon l'une des revendications précédentes, comportant en outre un second ensemble de moyeu et tambour commun (44 ; 44 ; 314 ; 314 ; 514 ; 44) fixe pour une rotation avec des premiers disques d'embrayage (54) d'embrayage additionnel formant une autre portion du premier embrayage (48), des deuxièmes disques d'embrayage (62) formant une portion du deuxième embrayage (58) et des troisièmes disques d'embrayage (68) formant une portion du troisième embrayage (60).

9. Transmission selon la revendication 8, dans laquelle une portion du troisième embrayage (60) chevauche axialement le deuxième embrayage (58).

10. Transmission selon la revendication 8 ou 9, dans laquelle une portion du troisième embrayage (60) chevauche axialement le premier embrayage (48).

11. Transmission (10 ; 200 ; 300 ; 400 ; 500 ; 600) selon la revendication 1, dans laquelle
la première sortie est fixe pour une rotation avec un premier ensemble de moyeu et tambour commun (42 ; 42 ; 308 ; 308 ; 512 ; 42) associé au frein (46) et au premier embrayage (48), et
la seconde sortie est fixe pour une rotation avec un second ensemble de moyeu et tambour commun (44 ; 44 ; 314 ; 314 ; 514 ; 44) associé au premier embrayage (48), au deuxième embrayage (58) et au troisième embrayage (60),
le premier embrayage (48) couplant sélectivement en entraînement le premier ensemble de moyeu et tambour commun et le second ensemble de moyeu et tambour commun,
le deuxième embrayage (58) couplant sélectivement en entraînement le second ensemble de moyeu et tambour commun et le second arbre d'entrée (22), et
le troisième embrayage (60) couplant sélectivement en entraînement le second ensemble de moyeu et tambour commun et le premier arbre d'entrée (20).

12. Transmission selon la revendication 11, dans laquelle le premier ensemble de moyeu et tambour commun comporte une pluralité de plateaux de frein (50) fixes pour une rotation sur un premier côté de celui-ci et une pluralité de premiers disques d'embrayage (56) sur un côté opposé.

13. Transmission selon la revendication 12, dans laquelle au moins une partie de la pluralité de plateaux de frein (50) et de la pluralité de premiers disques d'embrayage (56) se chevauchent axialement les uns les autres.

14. Transmission selon l'une des revendications 11 à 13, dans laquelle le premier embrayage (48) et le deuxième embrayage (58) comportent chacun des disques d'embrayage (54, 62) fixes pour une rotation avec le second ensemble de moyeu et tambour commun sur un premier côté de celui-ci, le troisième embrayage (60) ayant des disques d'embrayage (68) fixes pour une rotation sur un côté opposé du second ensemble de moyeu et tambour commun.

15. Transmission selon la revendication 14, dans laquelle au moins une partie des deuxièmes disques d'embrayage (62) chevauchent axialement une partie des troisièmes disques d'embrayage (68).

16. Transmission selon la revendication 14 ou 15, dans laquelle les troisièmes disques d'embrayage (68) chevauchent axialement une partie des premiers disques d'embrayage (54).

17. Transmission selon l'une des revendications 11 à 16, dans laquelle les premier et second arbres d'entrée (20 ; 22) tournent autour d'un axe commun.

18. Transmission selon la revendication 17, dans laquelle les premier et second arbres d'entrée (20 ; 22) se chevauchent axialement l'un l'autre.

19. Transmission (10 ; 200 ; 300 ; 400 ; 600) selon la revendication 11, dans laquelle le premier train de vitesses (80 ; 202 ; 80 ; 80 ; 516 ; 602) transfère un couple pour des premier et deuxième rapports de vitesse.

20. Transmission (10 ; 200 ; 300 ; 400) selon la revendication 19, dans laquelle le deuxième train de vitesses (86 ; 86 ; 86) transfère un couple pour des troisième et quatrième rapports de vitesse.

21. Transmission (600) selon la revendication 19, dans laquelle le deuxième train de vitesses (606) transfère un couple pour des troisième et cinquième rapports de vitesse.

22. Transmission (10 ; 300 ; 400 ; 500) selon la revendication 11, comportant en outre un troisième train de vitesses (92 ; 92 ; 92 ; 520) entraîné par le premier arbre d'entrée (20) et un quatrième train de vitesses (98 ; 98 ; 98 ; 522) entraîné par le second arbre d'entrée (22) pour fournir huit rapports de vitesse en marche avant.

23. Transmission (10 ; 200 ; 300 ; 400) selon la revendication 11, dans laquelle les rapports de vitesse pairs et impairs sont fournis par l'un des premier, deuxième, troisième et quatrième trains de vitesses.
